# EUROPÄISCHE PATENTSCHRIFT

(11) **EP 1 691 961 B1**
(45) Veröffentlichungstag und Bekanntmachung des Hinweises auf die Patenterteilung: **11.06.2008**
(21) Anmeldenummer: 04803920.0
(22) Anmeldetag: 09.12.2004
(51) Int. Cl.: B29C 33/56, B29C 33/38, B29C 41/38

(54) **WERKZEUG ZUR HERSTELLUNG VON KUNSTSTOFFHÄUTEN, DESSEN VERWENDUNG, VERFAHREN ZU DESSEN HERSTELLUNG UND VERFAHREN ZU DESSEN INSTANDHALTUNG**
TOOL FOR PRODUCING PLASTIC SKINS, USE OF THE TOOL, METHOD FOR PRODUCING THE TOOL AND METHOD FOR REPAIRING THE TOOL
MOULE DESTINE A LA PRODUCTION DE PEAUX DE MATIERE PLASTIQUE, SON UTILISATION, PROCEDE POUR SA PRODUCTION ET PROCEDE POUR SA MAINTENANCE

(30) Priorität: 11.12.2003 DE 10358628
(43) Veröffentlichungstag der Anmeldung: 23.08.2006
(73) Patentinhaber: Faurecia Innenraumsysteme GmbH, 76767 Hagenbach (DE)
(72) Erfinder: LIESEN, Martin, 58609 Lüdenscheid (DE); LIENHAED, Wolfgang, 97723 Hassenbach (DE)
(74) Vertreter: Pfenning, Meinig & Partner GbR
(86) Internationale Anmeldenummer: PCT/EP2004/014303
(87) Internationale Veröffentlichungsnummer: WO 2005/056265

(56) Entgegenhaltungen:
- EP-A- 1 277 554
- DE-A1- 10 052 951
- US-A- 5 437 547
- PATENT ABSTRACTS OF JAPAN Bd. 006, Nr. 263 (M-181), 22. Dezember 1982 (1982-12-22) -& JP 57 157708 A (HONDA GIKEN KOGYO KK), 29. September 1982 (1982-09-29)
- PARADIS R: "A COMPARISON OF THE CONVENTIONAL MACHINED ALUMINUM AND RAPID EPOXY SHELL PROTOYPE MOLD BUILDING PROCESSES" JOURNAL OF INJECTION MOLDING TECHNOLOGY, SOCIETY OF PLASTICS ENGINEERS, BROOKFIELD, CT, US, Bd. 2, Nr. 1, März 1998 (1998-03), Seiten 8-17, XP000740773 ISSN: 1533-905X
- PATENT ABSTRACTS OF JAPAN Bd. 018, Nr. 185 (C-1185), 30. März 1994 (1994-03-30) -& JP 05 339778 A (MITSUBOSHI BELTING LTD; others: 01), 21. Dezember 1993 (1993-12-21)
- PATENT ABSTRACTS OF JAPAN Bd. 014, Nr. 570 (M-1060), 18. Dezember 1990 (1990-12-18) & JP 02 243306 A (YAMAHA MOTOR CO LTD), 27. September 1990 (1990-09-27)

## Beschreibung

Die Erfindung betrifft ein Werkzeug zur Herstellung von Kunststoffhäuten, insbesondere zur Herstellung von Oberflächendekoren für Verkleidungsteile wie beispielsweise Innenverkleidungsteile von Kraftfahrzeugen, nach dem Oberbegriff des Hauptanspruches. Die. Erfindung betrifft ferner neben einer Verwendung eines derartigen Werkzeugs zur Herstellung einer Kunststoffhaut auch ein Verfahren zur Herstellung eines solchen Werkzeugs.

Ein gattungsgemäßes Werkzeug weist ein üblicherweise als dünne Metallschale ausgebildetes Abformwerkzeug auf, das beispielsweise als Gussform oder Sinterform dienen kann, also als formgebende Komponente des Werkzeugs. Dieses Abformwerkzeug ist dabei so über einem Träger des Werkzeugs angeordnet, dass zwischen dem Abformwerkzeug und dem Träger ein Raum verbleibt.

Bei Ausführungen derartiger Werkzeuge nach dem Stand der Technik wird dieser Raum zwischen dem Träger und dem Abformwerkzeug üblicherweise mit Harz oder Sand gefüllt, um einerseits eine mechanische Unterstützung des Abformwerkzeugs zu gewährleisten und das Abformwerkzeug dadurch vor Verformungen zu schützen und um andererseits dem Werkzeug als ganzem eine hinreichend hohe Wärmekapazität zu verleihen. Üblicherweise werden zusätzlich Rohrleitungen in den Raum zwischen Abformwerkzeug und Träger eingebracht, die ein Medium zum Temperieren des Werkzeugs führen können.

Ein Werkzeug der beschriebenen Art nach dem Stand der Technik bringt aber erhebliche Nachteile mit sich. Das Abformwerkzeug hält üblicherweise nur einer sehr begrenzten Anzahl von Herstellungsprozessen stand, bevor es wegen im Laufe der Zeit unvermeidlich auftretenden Schäden ausgewechselt werden muss. Nun verbackt das Abformwerkzeug allerdings im Lauf der Herstellungsprozesse mit dem dahinterliegenden Harz oder Sand, so dass nur die Möglichkeit verbleibt_, das gesamte Werkzeug auszutauschen, womit alle Komponenten des alten Werkzeugs unbrauchbar werden. Als Alternative böte sich nur die äußerst aufwendige Lösung an, das Abformwerkzeug "bergmännisch" von den übrigen Komponenten des Werkzeugs abzulösen, was allerdings kaum möglich ist, ohne weitere Schäden anzurichten. Man ist also mit dem Problem konfrontiert, unverhältnismäßig hohe Kosten zu verursachen, weil anstelle des verhältnismäßig einfach und mit wenig Material herzustellenden Abformwerkzeugs bei dessen Beschädigung das gesamte Werkzeug ersetzt werden muss.

Dokument JP-A-57157708 offenbart ein Werkzeug gemäß dem Oberbegriff des Anspruchs 1.

Der Erfindung liegt also die Aufgabe zugrunde, ein gattungsgemäßes Werkzeug zu entwickeln, das den beschriebenen Nachteil vermeidet, indem eine Ablösung des Abformwerkzeugs vom Träger und den üblichen Komponenten des Werkzeugs ohne deren Beschädigung ermöglicht wird. Der Erfindung liegt ferner die Aufgabe zugrunde, dadurch ein verbilligtes Verfahren zur Herstellung von Kunststoffhäuten zur Verfügung zu stellen sowie ein Verfahren anzugeben, mit dem ein entsprechendes Werkzeug hergestellt werden kann.

Diese Aufgaben werden erfindungsgemäß gelöst durch ein Werkzeug mit den kennzeichnenden Merkmalen des. Hauptanspruchs in Verbindung mit den Merkmalen des Oberbegriffs des Hauptanspruchs sowie durch eine Verwendung eines solchen Werkzeugs nach dem Anspruch 9 durch ein Verfahren mit den Merkmalen des Anspruchs 10 und durch ein Verfahren mit den Merkmalen des Anspruchs 12.

Der Raum zwischen dem Träger und dem Abformwerkzeug ist mit einer metallischen Füllung gefüllt, die einen niedrigeren Schmelzpunkt hat als ein das Abformwerkzeug bildendes Material. Somit wird es Möglich, diese Füllung durch Erhitzen zum Schmelzen zu bringen und dann das Abformwerkzeug abzunehmen, ohne weitere Schäden zu verursachen. Unter Umständen kann es dazu genügen, wenn die Füllung lediglich an einer am Abformwerkzeug anliegenden Oberfläche erwärmt wird, in der Regel wird aber zum Abnehmen des,Abformwerkzeugs die gesamte Füllung geschmolzen. Dadurch kann das alte Abformwerkzeug problemlos durch ein neues ersetzt werden, die übrigen Komponenten des Werkzeugs aber einschließlich der Füllung werterverwendet werden, was eine erhebliche Kostenersparnis und einen deutlich reduzierten Aufwand bei der Herstellung einer größeren Anzahl gleicher oder ähnlicher Kunststoffhäute zur Folge hat. Mit einer metallischen Füllung soll hier eine vorzugsweise ausschließlich aus Metall bestehende Füllung bezeichnet sein, nichtmetallische Zusätze von bis zu 3% Gewichtsanteilen sollen aber zulässig sein.

Ein Werkzeug der beschriebenen Art bietet sich insbesondere zur Herstellung einer Kunststoffhaut, bei der es sich z.B. um ein Oberflächendekor für eine Instrumententafel eines Kraftfahrzeugs handeln kann, durch Pulversintern an, wozu ein Kunststoff in Pulverform so auf das erhitzte Abformwerkzeug aufgebracht werden kann, dass es dort aufschmilzt und durch Sintern die Kunststoffhaut bildet. Andere Ausführungen der Erfindung können als Gussform oder Teil einer Gussform zur Herstellung von Gießhäuten geeignet sein. In jedem Fall kann das Abformwerkzeug sogeformt sein, dass es nicht nur eine großskalige 3D-Kontur einer entstehenden Kunststoffhaut vorgibt, sondern dieser Kunststoffhaut durch eine entsprechende Oberflächenstruktur einer der Füllung abgewandten, die Kunststoffhaut aufnehmenden Oberfläche auch eine Narbung verleit. Dadurch können z.B. Oberflächendekore mit einer Leder imitierenden Oberfläche erzeugt werden.

Zur Herstellung eines erfindungsgemäßen Werkzeugs oder für eine Ausrüstung dieses Werkzeugs mit einem neuen Abformwerkzeug kann der zwischen dem Träger und dem zuvor darüber angeordneten Abformwerkzeug verbleibende Raum in einfacher Weise mit einer metallischen Schmelze gefüllt werden, vorzugsweise vollständig, wodurch sich nach einem Aushärten der Schmelze die besagte metallische Füllung bildet und eine Verbindung zwischen dem Träger und dem Abförmwerkzeug zustande kommt. Bei einem solchen Verfahren wird das Abformwerkzeug, das zuvor durch galvanische Abscheidung oder durch Dampfauftragung auf eine Modellform in aufwandsarmer Weise gebildet worden sein kann, also mit der metallischen Schmelze hintergegossen.

Neben eine Wiederverwertbarkeit des Werkzeugs nach einem Auswechseln des Abformwerkzeugs hat die Erfindung den weiteren Vorteil, dass das fertige Werkzeug eine gegenüber vergleichbaren Werkzeugen nach dem Stand der Technik deutlich höhere Wärmeleitfähigkeit hat. Dadurch wird eine gleichmäßige und zügige Temperierung des Abformwerkzeugs vor, während und nach der Herstellung einer Kunststoffhaut wesentlich vereinfacht.

Besonders vorteilhaft erweist sich eine Verwendung einer Wismutlegierung für die metallische Füllung. Mit einer Wismutlegierung lässt sich zunächst der für die Erfindung wesentliche niedrige Schmelzpunkt besonders einfach realisieren. Darüber hinaus erlaubt Wismut aufgrund eines diesem Metall eigenen negativen Ausdehnungskoeffizienten eine Herstellung von Legierungen von betragsmäßig kleinen und in einem Bereich zwischen positiven und negativen Werten einstellbaren Ausdehnungskoeffizienten. Das aber ist naheliegenderweise von besonderem Vorteil, wenn es darum geht, wie im vorliegenden Fall einen Hohlraum auszugießen. Insbesondere kann dadurch bei einer geeigneten Zusammensetzung der Wismutlegierung ein guter Kontakt zwischen der Füllung und dem Abformwerkzeug gewährleistet werden, was sowohl für eine gute mechanische Unterstützung des Abformwerkzeugs als auch für einen guten Wärmetransport von Vorteil ist. Gute Resultate erzielt man in dieser Hinsicht mit Wismutlegierungen, die einen Gewichtsanteil von Wismut von zwischen 40% und 60%, vorzugsweise zwischen 45% und 50% haben. Andere zur Herstellung einer Legierung für die metallische Füllung besonders gut geeignete Metalle sind Cadmium, Indium, Zink und Zinn, mit denen sich insbesondere bei einer Kombination mit Wismut niedrige Schmelzpunkte und geeignete Ausdehnungskoeffizienten realisieren lassen. Eine Verwendung von Wismut bringt ferner den Vorteil mit sich, ungefährlich zu sein, weil bei einem Schmelzen keine gesundheitsschädlichen Dämpfe frei werden. In dieser Hinsicht ist - neben einer ebenfalls denkbaren Verwendung von reinem Wismut - insbesondere eine aus Wismut und Zinn bestehende Legierung empfehlenswert. Mit diesen beiden Metallen lässt sich problemlos eine Legierung gewünschter Schmelztemperatur und Aüsdehnungseigenschaften realisieren.

Vorzugsweise ist für die metallische Füllung ein Material mit einem Schmelzpunkt von zwischen 130°C und 180°C zu wählen, womit einerseits ein besonders einfaches Auslösen des Abformwerkzeugs ermöglicht wird, andererseits aber zu gewährleisten ist, dass die Füllung bei gewöhnlichen Betriebstemperaturen noch fest ist.

Als Material für das Abformwerkzeug kommen verschiedene im Vergleich zur Füllung bei höheren Temperaturen schmelzende Metalle in Frage, besonders gut eignet sich Nickel, mit dem eine Herstellung des Abformwerkzeugs besonders einfach durch galvanische Abscheidung von Nickel oder durch Nickeldampfauftragung auf eine Modellform möglich ist. Vorteilhaft ist dabei eine Auslegung des Abformwerkzeugs mit einer Wandstärke von zwischen 1 mm und 3 mm, womit einerseits ein überschaubarer Materialaufwand einhergeht, andererseits aber sichergestellt ist, dass beim Hintergießen des Abformwerkzeugs mit der die Füllung bildenden Schmelze keine Schäden an der die entstehenden Kunststoffhäute aufnehmenden Oberfläche des Abformwerkzeugs entstehen.

An das Abformwerkzeug können rückseitig Verankerungen, beispielsweise in Form von Krallen, angeformt sein zur formschlüssigen Verbindung des Abformwerkzeugs mit der metallischen Füllung. Dadurch wird eine bessere sowohl thermische als auch mechanische Verbindung des Abformwerkzeugs mit der Füllung erreicht, ohne dass ein Auslösen des Abformwerkzeugs aus der Füllung durch deren Schmelzen erschwert würde.

Für den Träger oder Teile des Trägers bietet sich eine Herstellung aus Gussstahl an, der dadurch hinreichend stabil ausgelegt werden kann, um ein hohes Gewicht zu tragen, das sich insbesondere durch die metallische Füllung ergibt - eine Menge von etwa zwei Tonnen einer Wismutlegierung wäre z.B. typisch für ein Werkzeug das zur Herstellung von Oberflächendekoren für Instrumententafeln bestimmt ist. Ein Träger aus Gussstahl wäre außerdem hinreichend hitzeresistent, um Schäden beim Hintergießen des Abformwerkzeugs und beim Schmelzen der metallischen Füllung zu vermeiden.

Eine Temperierung des Werkzeugs vor, während und nach der Herstellung einer Kunststoffhaut ist besonders einfach und präzise möglich, wenn in dem Raum zwischen Träger und Abformwerkzeug mindestens eine Rohrleitung zur Führung,eines Mediums angeordnet ist, die von der metallischen Füllung umgeben ist. Als eine solche Rohrleitung durchströmendes Medium eignet sich z.B. Wasser oder Dampf. Um Probleme zu vermeiden, die sich durch einen von der metallischen Füllung abweichenden Ausdehnungskoeffizienten einer solchen Rohrleitung ergeben könnten, ist es vorteilhaft, wenn die Rohrleitung innerhalb des mit der metallischen Füllung gefüllten Raums zwischen Träger und Abformwerkzeug ausschließlich aus geraden Leitungsabschnitten besteht, die dann durch mindestens ein außerhalb dieses Raums zwischen Träger und Abformwerkzeug verlaufendes Verbindungsstück verbunden sind. Bei einer in dieser Hinsicht besonders günstigen Ausführung können die innerhalb des Raums zwischen Träger und Abformwerkzeug verlaufenden Leitungsabschnitte auch so in die metallische Füllung eingebohrt sein, dass die Füllung selbst eine Leitungswand bildet.

Zur richtigen Positionierung des Abformwerkzeugs über dem Träger vor dem Hintergießen des Abformwerkzeugs bei der Herstellung des Werkzeugs kann dieses so ausgeführt sein, dass das Abformwerkzeug mit einem Rand auf einer seitlichen Wand des Trägers zu liegen kommt. Für eine gute Positionierung kann es vorteilhaft sein, wenn der Träger darüber hinaus mindestens eine Stütze aufweist, auf der das Abformwerkzeug zu ruhen kommt. Eine solche Stütze - vorzugsweise weist ein erfindungsgemäßes Werkzeug mehrere solche Stützen auf - kann auch verstellbar ausgeführt sein, beispielsweise höhenverstellbar durch eine Ausführung als Schraube, und so nicht nur zur Fixierung bzw. Positionierung, sondern auch zur Justierung vor dem Hintergießen des Abformwerkzeugs dienen.

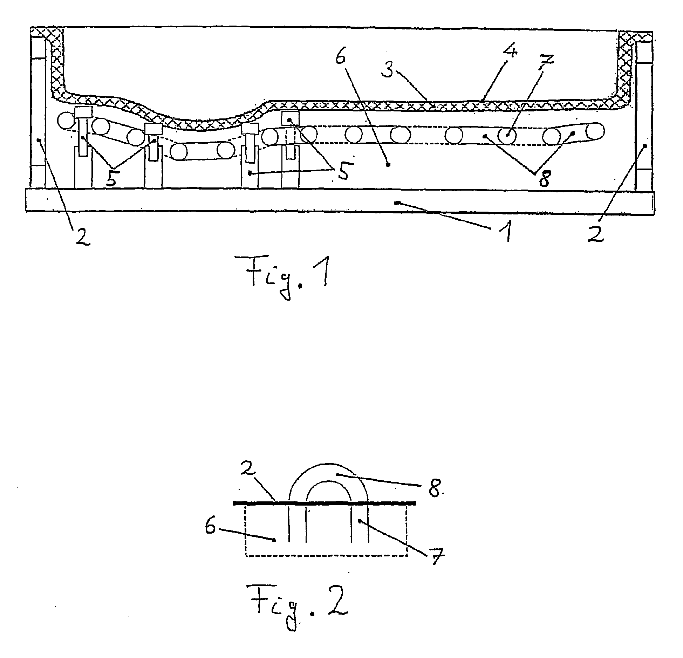

Ein Ausführungsbeispiel der Erfindung wird im Folgenden anhand der Fig. 1 und 2 erläutert. Es zeigt
Fig.1 einen Querschnitt durch ein erfindungsgemäßes Werkzeug und
Fig. 2 eine Aufsicht auf einen Ausschnitt des Werkzeugs aus Fig. 1 in einem Bereich einer seitlichen Wand dieses Werkzeugs.

Zu erkennen ist in der Fig. 1 ein Träger 1 aus Gussstahl des dort abgebildeten Werkzeugs, wobei dieser Träger 1 seitliche Wände 2 aufweist, auf denen ein Abformwerkzeug 3 ruht. Eine dem Träger 1 abgewahdte Oberfläche 4 dieses Abformwerkzeugs dient als formgebende Fläche für eine entstehende Kunststoffhaut, die als Oberflächendekor für eine Instrumententafel eines Kraftfahrzeugs dienen soll, bei einer Herstellung dieser Kunststoffhaut durch ein Pulversinterverfahren. Die Oberfläche 4 des Abformwerkzeugs 3 weist eine Narbung auf, um dem mit dem Werkzeug herzustellenden Oberflächendekor eine entsprechende Oberflächenstruktur zu verleihen. Das Abformwerkzeug 3 ist als Nickelschale mit einer Wandstärke von etwa 2 mm gebildet und seinerseits hergestellt durch galvanische Abscheidung von Nickel auf eine entsprechend geformte Modellform. In ähnlicher Weise kann ein entsprechendes Abformwerkzeug durch Nickeldampfauftragung hergestellt werden. Auf dem Träger 1 sind einige justierbare Stützen 5 angeordnet, die jeweils durch eine Ausführung als Schraube eine verstellbare Höhe haben und zu einer richtigen Positionierung und Unterstützung des darauf ruhenden Abformwerkzeugs 3 dienen.

Das Abformwerkzeug 3 ist so oberhalb des Trägers 1 angeordnet, dass zwischen dem Träger 1 und dem Abformwerkzeug 3 ein Raum 6 verbleibt, der bei dem abgebildeten Werkzeug mit einer Wismutlegierung gefüllt ist. Diese Wismutlegierung, in der Wismut mit einem Gewichtsanteil von etwa 45% bis 50% enthalten ist und die ferner neben vernachlässigbaren Spuren anderer Stoffe Zinn mit einem Gewichtsanteil von zwischen 50% und 55% enthält, hat einen Schmelzpunkt von etwa 138°C, also einen deutlich niedrigeren Schmelzpunkt als das das Abformwerkzeug 3 bildende Nickel. Die Wismutlegierung bildet also eine metallische Füllung des Raums 6 zwischen dem Träger 1 und dem Abformwerkzeug 3. Der niedrige Schmelzpunkt dieser Füllung erlaubt es, durch ein Anschmelzen der Füllung das Abformwerkzeug 3 in einfacher Weise zu entfernen. Dadurch wird ein Auswechseln des Abformwerkzeugs bei einer Beschädigung desselben möglich, ohne dass dabei an anderen Komponenten.des-Werkzeugs Schäden entstehen.

Eine Herstellung des abgebildeten Werkzeugs geschieht dadurch, dass nach einem Aufsetzen des Abformwerkzeugs 3 auf den Träger 1 und die Stützen 5 die Wismutlegierung als Schmelze in den Raum 6 hineingefüllt wird. Um dabei eine bessere Verbindung zwischen der metallischen Füllung und dem Abformwerkzeug 3 zu erreichen, sind rückseitig am Abformwerkzeug 3 hier nicht erkennbare Verankerungen angeformt. Diese Verankerungen, die als Krallen ausgebildet sind, führen zu einer formschlüssigen Verbindung zwischen dem Abformwerkzeug und der aushärtenden Wismutlegierung.

In dem Raum 6 ist eine von der Wismutlegierung umgebene Rohrleitung.7 angeordnet, welche bei einem Betrieb des Werkzeugs Wasser oder Dampf führen kann als Medium zum Temperieren des Werkzeugs. Diese Rohrleitung 7 weist innerhalb des Raums 6 ausschließlich gerade Leitungsabschnitte auf, die außerhalb dieses Raums 6 durch halbkreisförmige Verbindungsstücke 8 verbunden sind. Dadurch können durch thermische Ausdehnungen oder Schrumpfungen der Rohrleitung 7 verursachte Probleme vermieden werden. Dabei können die geraden Leitungsabschnitte u.U. in die metallische Füllung eingebohrt oder eingegossen sein, so dass die Wismutlegierung selbst Rohrwände für die Rohrleitung bildet.

Das abgebildete Werkzeug eignet sich zur Herstellung von Kunststoffhäuten durch ein Pulversinterverfahren, bei dem Kunststoff in Pulverform auf die erhitzte Oberfläche 4 aufgebracht wird und dort schmelzend eine Haut bildet. In entsprechender Weise können aber auch Werkzeuge zur Herstellung von Gießhäuten ausgeführt werden. In dem Fall wäre eine zusätzliche Werkzeughälfte vorzusehen, so dass ein Hohlraum entsteht, der dann zur Herstellung einer Kunststoffhaut beispielsweise mit Polyurethan gefüllt werden kann.

In Fig. 2 ist ein Ausschnitt des Werkzeugs aus Fig. 1 mit einer Umgebung einer der seitlichen Wände 2 des Trägers noch einmal als Aufsicht gezeigt. Neben dieser seitlichen Wand 2 ist dort ein Teil der Rohrleitung 7 zu erkennen, wobei ein außerhalb des Raums 6 verlaufendes Verbindungsstück 8, das einen halbkreisförmigen Verlauf hat, zwei gerade Leitungsabschnitte der Rohrleitung 7 verbindet.-Diese geraden Leitungsabschnitte verlaufen innerhalb des Raums 6 zwischen dem hier nicht abgebildeten Abformwerkzeug 3 und dem Träger 1 und sind von der genannten Wismutlegierung umgeben.

Die vorliegende Erfindung schlägt also ein Werkzeug zur Herstellung von Kunststoffhäuten vor, das ein Abformwerkzeug und einen Träger aufweist, wobei das Abformwerkzeug so über dem Träger angeordnet ist, dass zwischen dem Abformwerkzeug und dem Träger ein Raum verbleibt, und der Raum zwischen dem Träger und dem Abformwerkzeug mit einer metallischen Füllung - vorzugsweise mit einer Wismutlegierung - gefüllt ist, die einen niedrigeren Schmelzpunkt hat als ein das Abformwerkzeug bildendes Material. Das Abformwerkzeug kann dabei mit einem Rand auf einer Seitenwand des Werkzeugs ruhen, wobei die Seitenwand Bestandteil des Trägers oder auf ihrerseits auf diesem befestigt sein kann, um den mit der metallischen Füllung gefüllten Raum seitlich zu begrenzen. Eventuell rückseitig an das Abformwerkzeug angeformte Verankerungen können eine formschlüssige und daher verbesserte-Verbindung des Abformwerkzeugs mit der Füllung bewirken. Solche Verankerungen können auf verschiedenste Art geformt sein, beispielsweise als Haken.

Ein Werkzeug der mit der vorliegenden Erfindung vorgeschlagenen Art lässt sich besonders einfach und kostengünstig instand halten, insbesondere wenn an dem typischerweise am meisten beanspruchten und zuerst verschleißenden Abformwerkzeug Schäden auftreten. Ein entsprechendes Instandhaltungsverfahren kann vorsehen, dass die metallische Füllung zumindest in einem an das Abformwerkzeug angrenzenden Bereich auf eine über ihrem Schmelzpunkt und unter dem Schmelzpunkt des das Abformwerkzeug bildenden Materials liegende Temperatur erwärmt wird, worauf das Abformwerkzeug abgenommen und durch ein anderes Abformwerkzeug ersetzt wird, das dazu über dem Träger angeordnet wird, worauf die zwischen dem Träger und dem letztgenannten Abformwerkzeug befindliche metallische Füllung wieder so weit abgekühlt wird, dass sie erstarrt. Am einfachsten zu realisieren ist das Verfahren, wenn die die Füllung dabei vollständig oder nahezu eingeschmolzen wird. Die metallische Füllung kann dabei in dem Werkzeug verbleiben (typischerweise in einem durch den Träger und Seitenwände gebildeten Raum) oder auch teilweise oder vollständig abgelassen und anschließend wieder in das Werkzeug eingebracht werden. Selbstverständlich kann auch die metallische Füllung auf diese Weise vollständig oder teilweise ausgewechselt werden, was aber in der Regel nicht nötig sein wird.

## Patentansprüche

1. Werkzeug zur Herstellung von Kunststoffhäuten, das ein Abformwerkzeug und einen Träger aufweist, wobei das Abformwerkzeug so über dem Träger angeordnet ist, dass zwischen dem Abformwerkzeug und dem Träger ein Raum verbleibt, wobei der Raum (6) zwischen dem Träger (1) und dem Abformwerkzeug (3) mit einer metallischen Füllung gefüllt ist, die einen niedrigeren Schmelzpunkt hat als ein das Abformwerkzeug (3) bildendes Material in dem Raum (6) zwischen Träger (1) und Abformwerkzeug (3) mindestens eine Rohrleitung (7) zur Führung eines Mediums zum Temperieren des Werkzeugs angeordnet ist, die von der metallischen Füllung umgeben ist, wobei die Rohrleitung (7) gerade Leitungsabschnitte aufweist, **dadurch gekennzeichnet, dass** die Leitungsabschnitte durch mindestens ein außerhalb des Raums zwischen Träger (1) und Abformwerkzeug (3) verlaufendes Verbindungsstück (8) verbunden sind, wobei die geraden Leitungsabschnitte in die metallische Füllung eingebohrt sind.

2. Werkzeug nach Anspruch 1, **dadurch gekennzeichnet, dass** die metallische Füllung aus einer Wismutlegierung gebildet ist, vorzugsweise mit einem Gewichtsanteil von Wismut von zwischen 40% und 60%, besonders vorzugsweise mit einem Gewichtsanteil von zwischen 45% und 50%.

3. Werkzeug nach einem der Ansprüche 1 oder 2, **dadurch gekennzeichnet, dass** die metallische Füllung Anteile von Cadmium, Indium, Zink und/oder Zinn enthält.

4. Werkzeug nach einem der Ansprüche 1 bis 3, **dadurch gekennzeichnet, dass** die metallische Füllung einen Schmelzpunkt von zwischen 130°C und 180°C hat.

5. Werkzeug nach einem der Ansprüche 1 bis 4, **dadurch gekennzeichnet, dass** das Abformwerkzeug (3) aus Nickel besteht und/oder eine Wandstärke von zwischen 1 mm und 3 mm hat.

6. Werkzeug nach einem der Ansprüche 1 bis 5, **dadurch gekennzeichnet, dass** rückseitig an das Abformwerkzeug (3) Verankerungen angeformt sind zur formschlüssigen Verbindung des Abformwerkzeugs (3) mit der metallischen Füllung.

7. Werkzeug nach einem der Ansprüche 1 bis 6, **dadurch gekennzeichnet, dass** der Träger (1) zumindest teilweise aus Gussstahl besteht.

8. Werkzeug nach einem der Ansprüche 1 bis 7, **dadurch gekennzeichnet, dass** der Träger (1) mindestens eine Stütze (5) zur Fixierung des darauf ruhenden Abformwerkzeugs (3) aufweist.

9. Verwendung eines Werkzeugs nach einem der Ansprüche 1 bis 8 zur Herstellung einer Kunststoffhaut, vorzugsweise durch Pulversintern.

10. Verfahren zur Herstellung eines Werkzeugs nach einem der Ansprüche 1 bis 9, bei dem ein zwischen einem Träger (1) und einem darüber angeordneten Abformwerkzeug (3) verbleibender Raum (6) mit einer metallischen Schmelze, vorzugsweise einer Wismutlegierung, gefüllt wird, die anschließend aushärtet und eine Verbindung zwischen dem Träger (1) und dem Abformwerkzeug (3) bildet wobei in dem Raum zwischen dem Träger (1) und dem Abformwerkzeug (3) mindest eine Rohrleitung (7) zur Führung eines Mediums zum Temperieren des Werkzeugs angeordnet ist, die von der metallischen Füllung umgeben ist, wobei die Rohrleitung (7) gerade Leitungsabschnitte aufweist, **dadurch gekennzeichnet, dass** die Leitungsabschnitte in die metallische Füllung eingebohrt werden und durch mindestens ein außerhalb des Raums zwischen Träger (1) und Abformwerkzeug (3) verlaufendes Verbindungsstück (8) verbunden werden.

11. Verfahren nach Anspruch 10, **dadurch gekennzeichnet, dass** das Abformwerkzeug (3) zuvor durch galvanische Abscheidung oder durch Dampfauftragung auf eine Modellform gebildet wird, vorzugsweise durch galvanische Abscheidung von Nickel oder durch Nickeldampfauftragung.

12. Verfahren zur Instandhaltung eines Werkzeugs nach einem der Ansprüche 1 bis 8, **dadurch gekennzeichnet, dass** die metallische Füllung zumindest in einem an das Abformwerkzeug (3) angrenzenden Bereich auf eine über ihrem Schmelzpunkt und unter dem Schmelzpunkt des das Abformwerkzeug (3) bildenden Materials liegende Temperatur erwärmt wird, worauf das Abformwerkzeug (3) abgenommen und durch ein anderes Abformwerkzeug ersetzt wird, das dazu über dem Träger (1) angeordnet wird, worauf die zwischen dem Träger (1) und dem letztgenannten Abformwerkzeug befindliche metallische Füllung wieder so weit abgekühlt wird, dass sie erstarrt.

## Claims

1. A tool for the production of plastic skins, having a moulding tool and a bearer, the moulding tool being arranged above the bearer in such a manner that a space remains between the moulding tool and the bearer, the space (6) between the bearer (1) and the moulding tool (3) being filled with a metal filling with a lower melting point than a material forming the moulding tool (3), at least one conduit (7) to guide a medium for tempering the tool being arranged in the space (6) between the bearer (1) and the moulding tool (3), which conduit (7) is surrounded by the metal filling, the conduit (7) having straight conduit portions, **characterised in that** the conduit portions are connected by at least one connecting piece (8) running outside of the space between the bearer (1) and the moulding tool (3), the straight conduit portions being made in the metal filling by boring.

2. A tool according to claim 1, **characterised in that** the metal filling is formed from a bismuth alloy, preferably with a percentage by weight of bismuth of between 40% and 60%, in particular preferably with a percentage by weight of between 45% and 50%.

3. A tool according to one of claims 1 and 2, **characterised in that** the metal filling contains proportions of cadmium, indium, zinc and/or tin.

4. A tool according to any one of claims 1 to 3, **characterised in that** the metal filling has a melting point between 130°C and 180°C.

5. A tool according to any one of claims 1 to 4, **characterised in that** the moulding tool (3) is composed of nickel and/or has a wall thickness between 1 mm and 3 mm.

6. A tool according to any one of claims 1 to 5, **characterised in that** anchorages are formed on the rear of the moulding tool (3) for the positive-locking connection of the moulding tool (3) to the metal filling.

7. A tool according to any one of claims 1 to 6, **characterised in that** the bearer (1) is at least partially composed of cast steel.

8. A tool according to any one of claims 1 to 7, **characterised in that** the bearer (1) has at least one support (5) for the fixing of the moulding tool (3) resting thereon.

9. Use of a tool according to any one of claims 1 to 8 for the production of a plastics skin, preferably through powder sintering.

10. A method of producing a tool according to any one of claims 1 to 9, in which a space (6) remaining between a bearer (1) and a moulding tool (3) arranged thereabove is filled with a molten metal, preferably a bismuth alloy, which then hardens and forms a connection between the bearer (1) and the moulding tool (3), at least one conduit (7) being arranged in the space between the bearer (1) and the moulding tool (3) to guide a medium for tempering the tool, which conduit (7) is surrounded by the metal filling, the conduit (7) having straight conduit portions, **characterised in that** the conduit portions are made in the metal filling by boring and are connected by at least one connecting piece (8) running exterior to the space between the bearer (1) and the moulding tool (3).

11. A method according to claim 10, **characterised in that** the moulding tool (3) is formed beforehand by galvanic deposition or by vapour deposition on a die, preferably by galvanic deposition of nickel or by nickel vapour deposition.

12. A method of maintenance of a tool according to any one of claims 1 to 8, **characterised in that** the metal filling is, at least in a region adjoining the moulding tool (3), heated to a temperature above its melting point and below the melting point of the material forming the moulding tool (3), whereupon the moulding tool (3) is removed and replaced by another moulding tool arranged above the bearer (1) as well, whereupon the metal filling located between the bearer (1) and the last-mentioned moulding tool is again cooled to such an extent that it solidifies.

## Revendications

1. Outil pour la fabrication de peaux en matière plastique, présentant un outil de moulage et un support, dans lequel l'outil de moulage est disposé au-dessus du support de telle sorte qu'il reste un espace entre l'outil de moulage et le support, dans lequel l'espace (6) entre le support (1) et l'outil de moulage (3) est rempli d'une charge métallique qui dispose d'un point de fusion inférieur à celui d'un matériau constituant l'outil de moulage (3), dans lequel, dans l'espace entre le support (1) et l'outil de moulage (3), au moins une conduite (7) est disposée pour amener un milieu pour tempérer l'outil, la conduite étant entourée par la charge métallique, dans lequel la conduite (7) présente des segments de conduite droits, **caractérisé en ce que** les segments de conduite sont reliés par au moins une pièce de raccordement (8) s'étendant en dehors de l'espace entre le support (1) et l'outil de moulage (3), dans lequel les segments de conduite droits sont enfoncés dans la charge métallique.

2. Outil selon la revendication 1, **caractérisé en ce que** la charge métallique est formée à partir d'un alliage bismuthique, de préférence avec un pourcentage en poids de bismuth entre 40 % et 60 %, de façon particulièrement préférée avec un pourcentage en poids entre 45 % et 50 %.

3. Outil selon l'une quelconque des revendications 1 ou 2, **caractérisé en ce que** la charge métallique contient des pourcentages de cadmium, d'indium, de zinc et/ou d'étain.

4. Outil selon l'une quelconque des revendications 1 à 3, **caractérisé en ce que** la charge métallique présente un point de fusion entre 130 °C et 180 °C.

5. Outil selon l'une quelconque des revendications 1 à 4, **caractérisé en ce que** l'outil de moulage (3) est composé de nickel et/ou qu'il présente une épaisseur de paroi entre 1 mm et 3 mm.

6. Outil selon l'une quelconque des revendications 1 à 5, **caractérisé en ce qu'**à l'arrière, des ancrages sont rapportés à l'outil de moulage (3) pour un raccordement par complémentarité de forme de l'outil de moulage avec la charge métallique.

7. Outil selon l'une quelconque des revendications 1 à 6, **caractérisé en ce que** le support (1) est au moins en partie composé d'acier coulé.

8. Outil selon l'une quelconque des revendications 1 à 7, **caractérisé en ce que** le support (1) présente au moins un soutien (5) pour fixer l'outil de moulage (3) reposant sur celui-ci.

9. Utilisation d'un outil selon l'une quelconque des revendications 1 à 8 pour fabriquer une peau en matière plastique, de préférence par frittage de poudre.

10. Procédé de fabrication d'un outil selon l'une quelconque des revendications 1 à 9, dans lequel un espace (6) restant entre un support (1) et un outil de moulage (3) disposé au-dessus de celui-ci est rempli par une masse fondue métallique, de préférence un alliage bismuthique, qui est ensuite cuite et forme un raccordement entre le support (1) et l'outil de moulage (3), dans lequel dans l'espace entre le support (1) et l'outil de moulage (3), au moins une conduite (7) pour amener un milieu pour tempérer l'outil est disposée, la conduite étant entourée par la charge métallique, dans lequel la conduite (7) présente des segments de conduite droits, **caractérisé en ce que** les segments de conduite sont enfoncés dans la charge métallique et sont reliés par au moins une pièce de raccordement (8) s'étendant en dehors de l'espace entre le support (1) et l'outil de moulage (3).

11. Procédé selon la revendication 10, **caractérisé en ce que** l'outil de moulage (3) est d'abord formé par dépôt galvanique ou par vaporisation sur un moule modèle, de préférence par dépôt galvanique de nickel ou par vaporisation de nickel.

12. Procédé d'entretien d'un outil selon l'une quelconque des revendications 1 à 8, **caractérisé en ce que** la charge métallique est réchauffée au moins dans une zone adjacente à l'outil de moulage (3) jusqu'à une température située au-dessus de son point de fusion et au-dessous du point de fusion du matériau constituant l'outil de moulage (3), **en ce qu'**ensuite, l'outil de moulage (3) est retiré et remplacé par un autre outil de moulage qui est à cet effet disposé au-dessus du support (1), **en ce qu'**ensuite, la charge métallique se trouvant entre le support (1) et l'outil de moulage mentionné en dernier est refroidie jusqu'à ce qu'elle se solidifie.
